Europäisches Patentamt

(19) European Patent Office

Office européen des brevets

(11) Publication number: **0 224 671 B1**

## EUROPEAN PATENT SPECIFICATION

(45) Date of publication of patent specification: 04.12.91   (51) Int. Cl.5: **G01D 5/247**, G01P 3/481, G01D 5/245, G01P 3/44

(21) Application number: 86113338.7

(22) Date of filing: 27.09.86

(54) Digital rotation detecting apparatus.

(30) Priority: 04.10.85 JP 222256/85

(43) Date of publication of application:
10.06.87 Bulletin 87/24

(45) Publication of the grant of the patent:
04.12.91 Bulletin 91/49

(84) Designated Contracting States:
CH DE FR GB LI SE

(56) References cited:
GB-A- 2 113 932
JP-A-60 187 864

PATENT ABSTRACTS OF JAPAN, vol. 9, no.
64 (P-343)[1787], 23rd March 1985; & JP-A-59
200 964 (SHINKO DENKI K.K.) 14-11-1984

(73) Proprietor: MITSUBISHI DENKI KABUSHIKI
KAISHA
2-3, Marunouchi 2-chome Chiyoda-ku
Tokyo 100(JP)

(72) Inventor: Kawai, Jyoji Seigyo Seisakusho
MITSUBISHI DENKI K.K. 1-2, Wadasaki-Cho
1-Chome
Hyogo-Ku Kobe-Shi Hyogo-Ken(JP)

(74) Representative: Selting, Günther, Dipl.-Ing. et
al
Deichmannhaus am Hauptbahnhof
W-5000 Köln 1(DE)

# EP 0 224 671 B1

## Description

This invention relates to a digital rotation detecting apparatus for detecting a rotation angle and the rotational speed of a rotation body such as a motor.

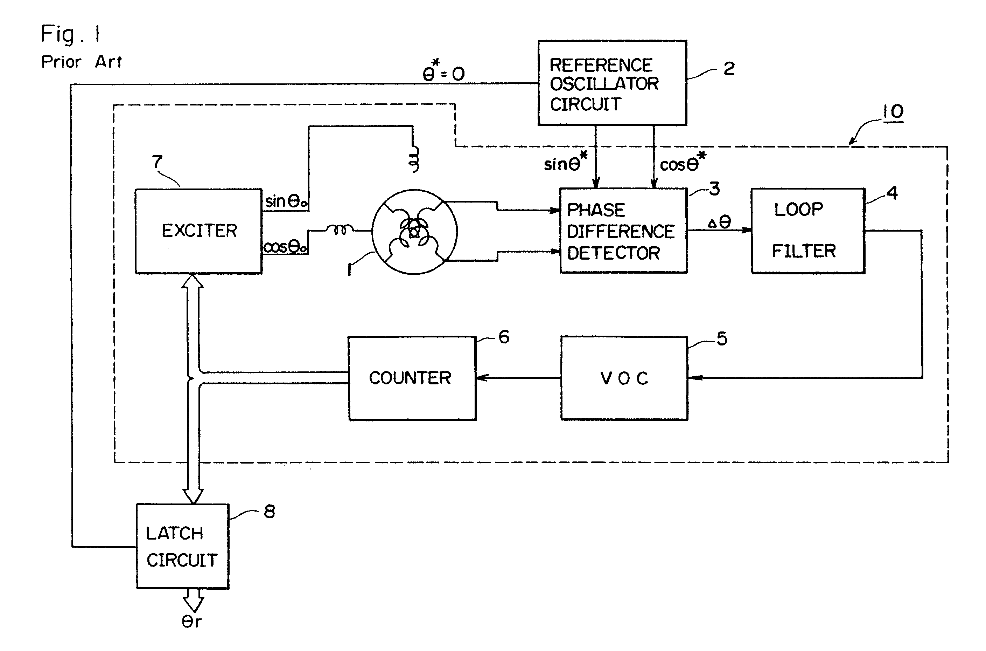

Fig. 1 is a block diagram of the conventional digital rotation detecting apparatus disclosed in the 546 National Convention of Japanese Institute of Electric Engineers in 1982. In Fig. 1, reference numeral 1 designates a two-phase resolver which rotates in association with a rotary body, such as a motor, 2 designates a reference oscillator circuit of the fixed frequency having a two-phase output, 3 designates a phase difference detector for detecting a phase difference between the two-phase output of the reference oscillator circuit 2 and that of the two-phase resolver 1, 4 designates a loop filter for proportional-plus-integral-computing the aforesaid phase difference, 5 designates a voltage control oscillator (to be called the VCO hereinafter) for generating pulses with a frequency corresponding to the output of the loop filter 4, 6 designates a counter which counts the output pulse of the VCO 5, 7 designates an exciter which generates the two-phase sinusoidal-waves output of the phase value corresponding to the counted value by the counter 6 so as to excite the two-phase resolver 1, and 8 designates a latch circuit for latching the counted value by the counter 6 by means of the pulse generated by the reference oscillator circuit 2.

Next, explanation will be given on operation of the aforesaid conventional apparatus. At first, when a phase angle of the two-phase resolver 1 is represented by $\theta_r$ and an excitation phase of the exciter 7 by $\theta_0$, the two-phase resolver 1 generates the two-phase sinusoidal-waves of phase angle $(\theta_0 - \theta_r)$. The phase of the two-phase output of the reference oscillator circuit 2 is represented by $\theta^*$, so that an output $\Delta\theta$ of the phase difference detector 3 is given in the following equation:

$$\Delta\theta = \theta^* - (\theta_0 - \theta_r) \qquad (1),$$

where, since the portion surrounded with the broken line 10 in Fig. 1 constitutes a closed loop of phase synchronization generally called the PLL (Phase Locked Loop), automatic control is carried out to obtain $\Delta\theta = 0$. Hence, the following equation (2) is derived from the equation (1):

$$\theta^* - \theta_0 - \theta_r \qquad (2).$$

In the equation (2), when $\theta^* = 0$, $\theta_0 = \theta_r$ is obtained, in other words, when the value of $\theta_0$ is sampled at the time of $\theta^* = 0$, the sampled value indicates $\theta_r$. Also, since the counted value generated by the counter 6 is proportional to the excitation phase $\theta_0$, when the latch circuit 8 latches the counted value by the counter 6 at the timing of outputting the pulse by the reference oscillator circuit 2 at every cycle of $\theta^* = 0$ thereof, the phase angle $\theta_r$ of the two-phase resolver 1 at the time of $\theta^* = 0$ is to be detected. When a difference $\theta_r$-(NEW) - $\theta_r$(OLD) between the phase angles $\theta_r$ twice sampled is divided by a cycle period $T^*$ of the phase $\theta^*$, the rotational speed is given in the following equation:

$$\omega r = \frac{\theta_r(NEW) - \theta_r(OLD)}{T^*} \quad \ldots\ldots\ldots\ldots (3)$$

The conventional digital rotation detecting apparatus constructed as the mentioned above samples the phase angle $\theta_r$ at the time when the phase of the two-phase output of the reference oscillator circuit is zero, that is, when $\theta^* = 0$, whereby $\theta_r$ at a desired time cannot be obtained, and a detection delay of $T^*$ at a maximum is created. For a rotation control apparatus for a motor using a microcomputer, the timing of introducing into the control apparatus the detected phase angle $\theta_r$ and the cycle period thereof are often not-identical with the timing of $\theta^* = 0$ or the cycle period of $\theta^*$. Therefore, the detection delay is also created to enlarge a detection error in the last phase angle $\theta_r$. As a result, the problem has been created in that the speed computation executed by the microcomputer and given in the equation (3) of course causes the error.

In order to improve the detection accuracy for the phase angle $\theta_r$, the maximum counted value of the counter 6 need only be larger, but it is required therefor either to raise the oscillation frequency of the VCO 5, or to lower the reference oscillation frequency $f^*$, or to perform both the processings. The maximum oscillation frequency of VCO 5, however, has an upper limit, so that it is necessary to lower the reference oscillation frequency $f^*$ to obtain a high accuracy for detecting the phase angle $\theta_r$.

Now, the two-phase resolver 1 is excited with the frequency of $f_0 = f^* + f_r$, but when the resolver 1

2

reversely rotates, the frequency becomes $f_o = f^* - |f_r|$. Accordingly, the excitation frequency $f_o$ approaches zero as the reference oscillation frequency $f^*$ is reduced to approach $|f_r|$, thereby creating the problem in that the resolver 1 must be considered to be low-frequency-excited and the exciter 7 also must take a large current capacity.

From GB-A 2 113 932 a digital rotation detecting apparatus is known comprising a two-phase resolver excited by an exciter. The two-phase resolver and, therefore, the exciter are incorporated in a phase locked loop means for synchronizing the phases of the output signals of the two-phase resolver and the output signal of a reference signal generator. The phase locked loop means includes a phase difference detector for detecting the phase difference between the output signal of the two-phase resolver and the output signal of the reference signal generator, and further includes a voltage control oscillator converting the output signal of the phase difference detector to a pulse signal having a frequency corresponding to the phase difference detected by the phase difference detector. After frequence division the output signal of the voltage control oscillator is fed to the exciter. Changes of the frequency of the output signal of the voltage control oscillator results in changing the frequency of the excitation signal generated by the exciter and fed to the two-phase resolver. This changing of the excitation signal frequency degrads the accuracy of the detection of the rotation position of the rotator coupled with the two-phase resolver for the following two reasons. On the one hand lower frequency excitation causes the cores of the excitation coils to be saturated faster. However, the saturation distorts the waveform of the output signals of the two-phase resolver and, therefore, degrads the detecting accuracy of the rotational position. On the other hand, the inductance and capacitance of the resolver vary according to the excitation frequency. This variation of the reactance may cause an error in detecting the rotational position. Moreover, in the known apparatus the rotational position merely can be detected when the phase of the reference signal is zero. Therefore, detecting the rotational position can only be performed with a rather low resolution reducing detecting accuracy.

From JP-A 60 187 864 an apparatus for detecting rotational speed and rotational position using a resolver is known in which the phase of the output signal of the resolver is compared with the phase of a pulse signal gerenated every time the analog quantity of the phase state signal of the exciter of the resolver becomes equal to that of the rotational angle detection signal. In the known apparatus, for generating the rotational angle detection signal, a counter is used which in accordance with the direction of rotation, either counts up or counts down. The pulses of a pulse signal fed to the counter, the frequency of the pulse signal corresponding to the output signal of a phase difference detector comparing the phases of the above-mentioned signals.

It is the object of the present invention to provide a digital rotation detecting apparatus being capable of accurately detecting the actual rotational position at any desired time with practically no delay.

According to a first embodiment of the invention this object is solved by a digital rotation detecting apparatus according to Claim 1. This apparatus comprises a two-phase resolver outputting two signals each having a phase angle $\theta_0$, an exciter for exciting said two-phase resolver, and a phase locked loop means for synchronizing the phases of the output of the two-phase resolver and a predetermined signal. The phase locked loop means includes a phase difference detector for detecting the phase difference between the output signal of the two-phase resolver and the output signal of a two-phase signal generator outputting two output signals having a phase angle $\hat{\theta}$. The phase angle $\hat{\theta}$ is in proportion of the output signal of a voltage control oscillator outputting a frequency signal determined by the output of the phase difference detector. Moreover, the apparatus according to the invention is provided with a first counting means for simultaneously counting up according to a frequency relating to the frequency of the output signal of the exciter and counting down according to the frequency of the voltage control oscillator, or vice versa, the output signal of the first counting means corresponding to the rotational angle of the two-phase resolver.

A second embodiment of the invention is defined in Claim 6. According to this embodiment, the two-phase signal generator is replaced by a two-phase reference oscillator outputting two signals each having a phase angle $\theta^*$, the phase difference detector detecting the phase difference between the output signals of the two-phase resolver and the output signals of the two-phase reference oscillator. In this embodiment of the invention, the first counting means simultaneously counts up according to a frequency relating to the frequency of the output signal of the exciter and counts down according to the frequency of the output signals of the two-phase reference oscillator, or vice versa, the output signal of the first counting means corresponding to the rotational angle of the two-phase resolver.

In the digital rotation detecting apparatus of the invention there are used the clock pulses of the voltage control oscillator and the clock pulses having a frequency of a multiple of the excitation frequency in order to detect the phase angle of the resolver. The resolver is excited at a fixed frequency and the output of the two-phase resolver is introduced in the phase locked loop means so that clock pulses of the voltage control oscillator of the phase locked loop means and the clock pulses having a frequency of a multiple of the excitation frequency simultaneously actuate the first up-down-counter means for simultaneously counting up and down, thereby detecting an instantaneous value of the phase angle of the resolver. The digital rotation detecting apparatus of the invention improves the accuracy of detecting the phase angle of the two-phase resolver while keeping constant the excitation frequency of the resolver, without using a low frequency as the excitation frequency of the resolver, in other words, without the need to excite the resolver by the low frequency.

The above and further objects and features of the invention will more fully be apparent from the following detailed description with accompanying drawing, in which

Fig. 1 is a block diagram of the conventionally used digital rotation detecting apparatus, and

Figs. 2 through 7 are block diagrams of the embodiments of a digital rotation detecting apparatus of the invention respectively.

Next, explanation will be given on an embodiment of the digital rotation detecting apparatus of the invention.

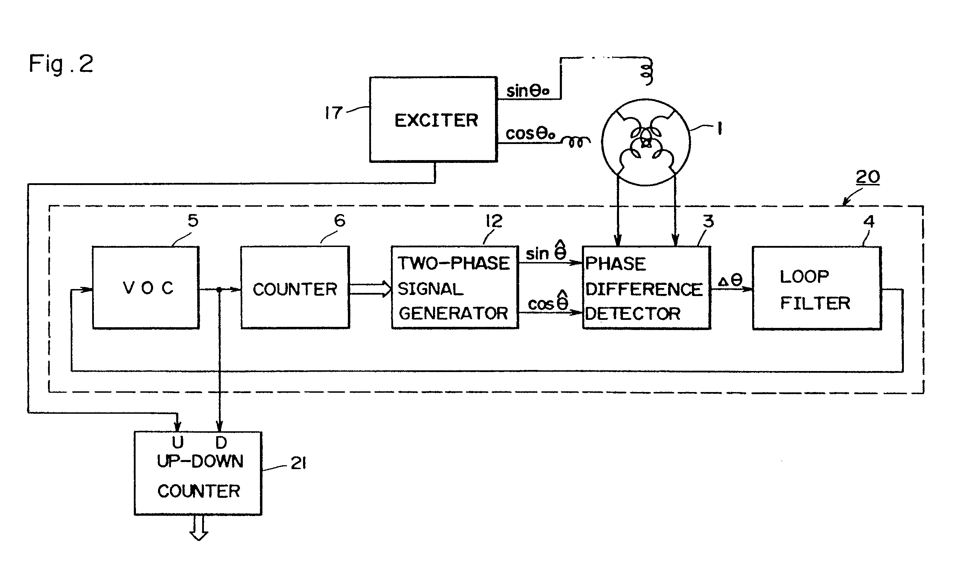

Fig. 2 is a block diagram of a first embodiment of the digital rotation detecting apparatus of the invention, in which reference numeral 1 designates a two-phase resolver which rotates in association with a rotary body, such as a motor, 3 designates a phase difference detector for detecting a phase difference between a two-phase output of a two-phase signal generator 12 described later and that of the two-phase resolver 1, 4 designates a loop filter for proportional-plus-integral-computing the phase difference, 5 designates a voltage control oscillator (to be called VCO hereinafter) for generating pulses having a frequency corresponding to an output of the loop filter 4, 6 designates a counter for counting the output pulse from the VCO 5, 12 designates the above-mentioned two-phase signal generator which generates a two-phase AC signal of the phase corresponding to the counted value of the counter 6 as a second counter means, 17 designates an exciter for exciting the resolver 1, and 21 designates an up-down counter as a first counting means which increases or decreases the counted values by the pulse given from the exciter 17 and the output pulse from the VCO 5.

In addition, the same components as those shown in Fig. 1 of a conventional embodiment are designated by the same reference numerals.

Next, explanation will be given on operation of the digital rotation detecting apparatus of the invention. At first, the two-phase resolver 1 is excited by the two-phase alternate current of the fixed frequency from the exciter 17. When the phase of two-phase alternate current is represented by $\theta_o$ and a phase-angle of the two-phase resolver 1 by $\theta_r$, a two-phase AC signal having a phase of $\theta_o - \theta_r$ is outputted from the two-phase resolver 1 and fed to the phase difference detector 3. The VCO 5 oscillates by the frequency corresponding to the output voltage of the loop filter 4, the oscillation pulses by VCO 5 being counted by the counter 6. The two-phase signal generator 12 generates the two-phase AC signal having a phase angle in proportion to the counted value of the counter 6. The phase difference detector 3 detects a difference $\Delta\theta = (\theta_o - \theta_r) - \hat{\theta}$ between the phase $(\theta_o - \theta_r)$ of the two-phase output signal from the resolver 1 and the phase $\hat{\theta}$ of the output signal of the two-phase signal generator 12, the detected phase-difference signal being given to the loop filter 4. In Fig. 2, the portion surrounded by the broken line 20 constitutes a PLL (Phase Locked Loop), in which the loop filter 4, which carries out the proportional-plus-integral operation, is automatically controlled to always keep zero the phase angle $\Delta\theta$. Hence, the following equation is obtained:

$$\theta_r = \theta_o - \hat{\theta} \qquad (4)$$

When the respective frequencies are represented by $f_o$, $f_r$ and $\hat{f}$, the following equation should be held:

$$f_r = f_o - \hat{f} \qquad (5)$$

When the maximum counting number of the counter 6 is represented by N, the following equation is obtained:

$$N\left(\frac{\theta_r}{2\pi}\right) = \int N f_r \, dt = \int (N f_o - N\hat{f}) \, dt \quad \ldots \ldots \quad (6)$$

$N\hat{f}$ is equal to the oscillation frequence $f_{vco}$ of VCO 5, therefore, the following equation is obtained from the equation (6):

$$N(\frac{\theta_r}{2\pi}) = \int (Nf_o - f_{vco})dt \quad \dots\dots\dots\dots\dots\dots \quad (7)$$

In order to obtain the value of the right side of the equation (7), the up-down counter 21 need only to be counted up by the clock of frequency $Nf_o$ and counted down by the clock of VCO 5.

The clock of frequency $Nf_o$ is obtained from the exciter 17. In detail, above-mentioned clock of frequency $Nf_o$ is obtained together with the exciting frequency $f_o$ from the exciter by constitution thereof including an oscillator of frequency $Nf_o$ and a $\frac{1}{N}$ frequency divider.

It is seen from the equation (7) that $\theta_r$ is able to be detected with accuracy of $\frac{1}{N}$. The detection delay depends on the cycle periods of $Nf_o$ and $N\hat{f}(=N(f_o-f_r))$, the cycle periods being extremely reducible by selecting N to be larger. In other words, although $f_o$ is generally several kilohertzes, $Nf_o$ can select even several tens megahertzes, whereby the detection delay is deemed to be zero in practical use and the phase angle $\theta_r$ at a desired time is detectable. Furthermore, there is no problem of the low frequency excitation because the two-phase resolver 1 is excited by fixed frequency.

In order to detect the rotational speed, a microprocessor need to sample the phase angle $\theta_r$ at a certain time interval $\Delta T$ and a difference between the two continuous sampling values need to be divided by $\Delta T$. In addition, in the first embodiment, the up-down counter 21 is not given the initial integrated value, whereby the absolute rotational phase angle obtained by deciding a specific rotational position to be $\theta_r = 0$ is not detected, which is not problematical because in the field of rotation control of the motor a rotation angle from a certain time point to the next is required.

Next, explanation will be given on a second embodiment of the invention.

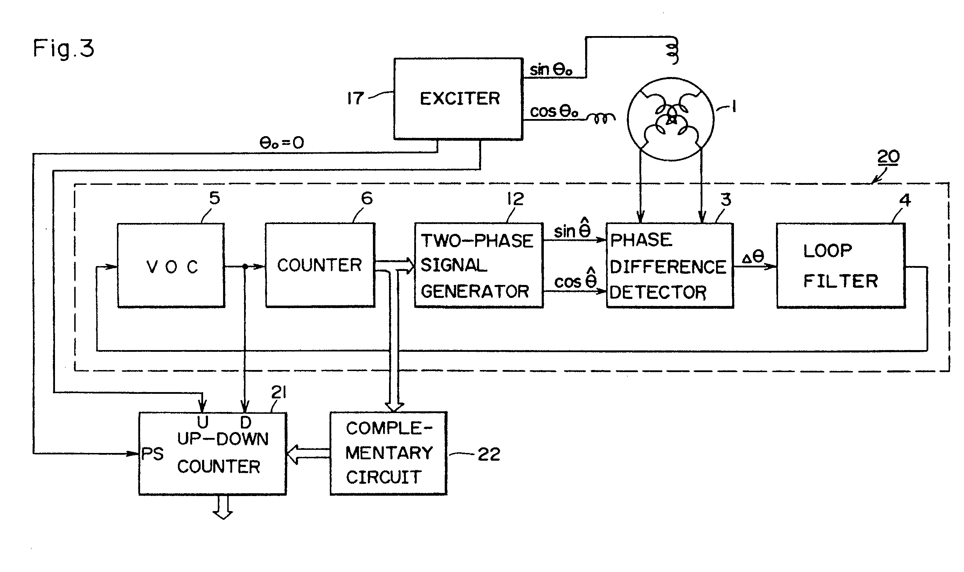

In Fig. 3 of a block diagram thereof, the counted value by the counter 6 at the first embodiment shown in Fig. 2 is given to an up-down counter 21 through a complementary circuit 22, so that the up-down counter 21 is adapted to preset a complement to the counted value of the counter 6 through a preset signal generated when the phase angle $\theta_o$ of the exciter 17 becomes zero. In other words, at the time of $\theta_o = 0$, $\theta_r = -\hat{\theta}$ is obtained. Meanwhile, since the counted value by counter 6 always indicates

$$N(\frac{\hat{\theta}}{2\pi}),$$

the complement to the counted value of the counter 6 is preset at the time of $\theta_o = 0$ to thereby enable the up-down counter 21 to be given the initial integrated value.

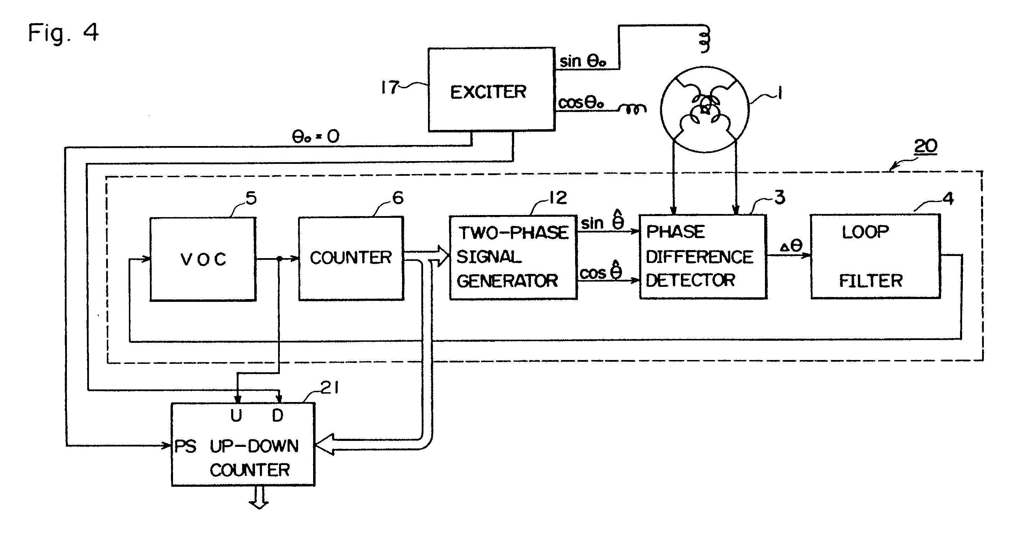

Accordingly, in the second embodiment, in addition to aforesaid characteristics of the first embodiment, the absolute rotational phase angle at the specific rotational position of $\theta_r = 0$ of the resolver can be detected. Also, if an up signal and a down signal to be introduced into the up-down counter 21 are replaced with each other as shown in Fig. 4, the preset data of the second embodiment can be set without using the complementary circuit 22, where a phase angle $\theta_r$ signal detected at that time becomes the complement (-$\theta_r$).

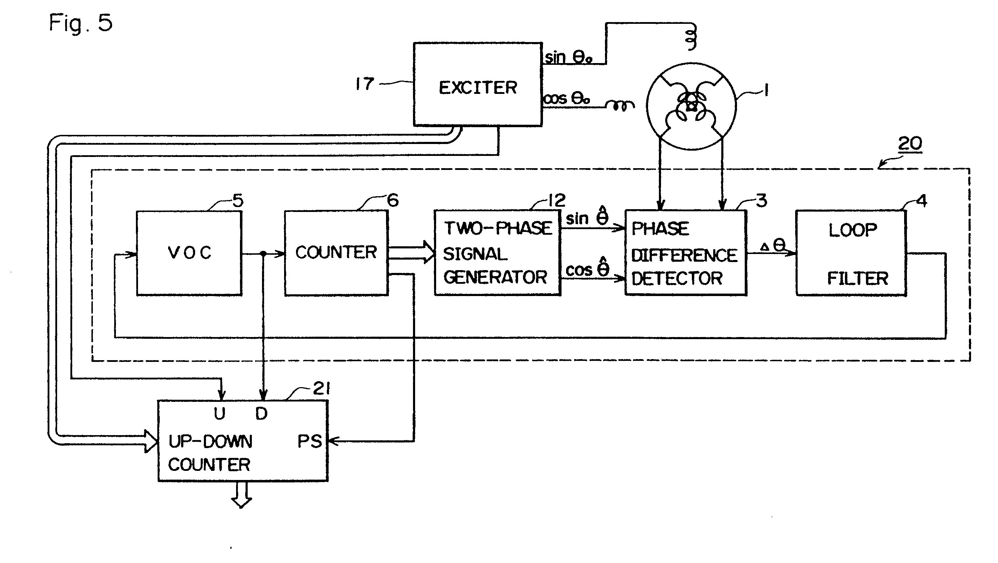

Furthermore, as seen from the equation (4), since $\theta_r = \theta_o$ is obtained at the time of $\hat{\theta} = 0$, $\theta_o$ may be preset at the time of $\hat{\theta} = 0$ as shown in Fig. 5. In this case, as described in the first embodiment shown in Fig. 2, the counted value of a frequency-dividing counter in the exciter 17 is usable as the preset data $\theta_o$.

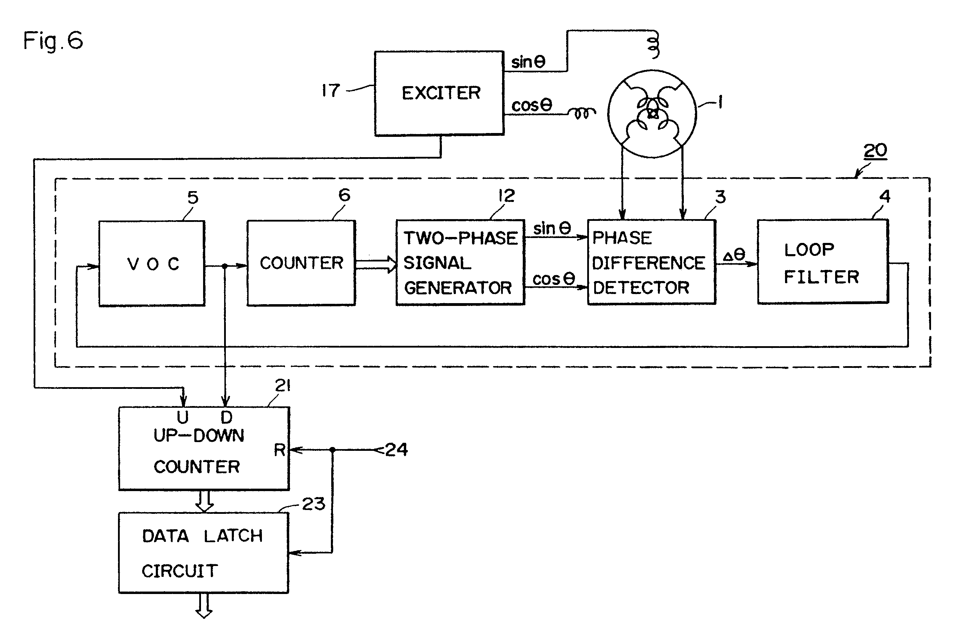

Next, in Fig. 6, a block diagram of a third embodiment of the invention is shown. The third embodiment is different from the first embodiment shown in Fig. 2 in that the counted value of an up-down counter 21 is adapted to be latched to a data latch circuit 23 by a unit cycle period pulse 24. The latch circuit 23 latches the counted value of the up-down counter 21 every time the unit pulse 24 is given, and just thereafter the up-down counter 21 is reset to start new counting. Hence, the value latched by the data latch circuit 23 at the time when the up-down counter 21 is reset, is a rotation angle by which the resolver 1 rotates for the unit time, in turn the rotational speed of the resolver 1. In other words, the value latched by the data latch circuit 23 is read out to thereby enable the rotational speed of the resolver 1 to be directly detected.

The third embodiment shown in Fig. 6, however, may be constructed to reset the up-down counter 21 in response to the unit period pulse 24 after the microprocesser reads in the counted value of the up-down counter 21. In this case, there is no need of using the data latch circuit 23.

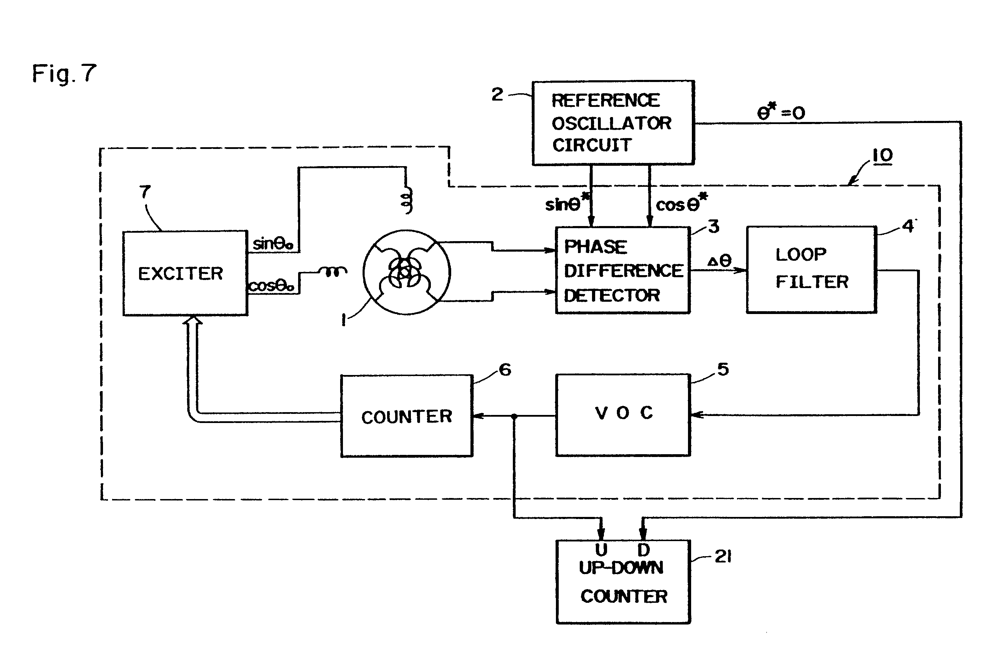

In addition, in comparison of the equation (2) with that (4), $\theta_o$ and $\theta_r$ are similar to each other and $\theta^*$ corresponds to $\hat{\theta}$, so that the detection of rotation angle by the up-down counter in the respective first, second and third embodiments, when the low frequency excitation is out of consideration, is also applicable to aforesaid conventional art as shown in Fig. 7.

**Claims**

1. Digital rotation detecting apparatus comprising
   - a two-phase resolver (1) outputting two signals each having a phase angle ($\theta_0$),
   - an exciter (17) for exciting said two-phase resolver (1), and
   - a phase locked loop means (20) for synchronizing the phases of the output of said two-phase resolver (1) and a predetermined signal, said phase locked loop means (20) including a phase difference detector (3) for detecting the phase difference between the output of said two-phase resolver (1) and the predetermined signal, and a voltage control oscillator (5) outputting a frequency signal determined by the output of said phase difference detector (3),
   
   **characterized by**
   - a two-phase signal generator (12) for generating two output signals having a phase angle ($\hat{\theta}$) in proportion of the output signal of said voltage control oscillator (5), said phase difference detector (3) detecting the phase difference between the phase angle ($\theta_0$) of the output signals of said two-phase resolver (1) and the phase angle ($\hat{\theta}$) of the output signals of said two-phase signal generator (12), and
   - a first counting means (21) for simultaneously counting up according to a frequency relating to the frequency of the output signal of said exciter (17) and counting down according to the frequency of said voltage control oscillator (5) or vice versa, the output signal of said first counting means (21) corresponding to the rotational angle of said two-phase resolver (1).

2. Apparatus according to claim 1, characterized in that
   - said phase locked loop means (20) further comprises

   a computing loop filter (4) for proportional-plus-integral computing the output of said phase difference detector (3), said voltage control oscillator (5) generating pulses of a frequency corresponding to the output signal of said computing loop filter (4), and

   a second counting means (6) for counting the output signal fequency of said voltage control oscillator (5), the phase angle of the two output signals of said two-phase signal generator (12) corresponding to the counted value of said second counting means (6), and
   - the counted value of said first counting means (21) is made increasable or decreasable by the multiple frequency of the excitation frequency of said two-phase resolver (1) and the output signal frequency of said voltage control oscillator (5), thereby detecting the number of rotations of said two-phase resolver (1).

3. Apparatus according to claim 2, characterized in that the counted value of said second counting means (6) is preset to said first counting means (21) at the time when the phase of the output signal of said exciter (17) is zero.

4. Apparatus according to claim 2, characterized in that the counted value indicating the phase of said exciter (17) is preset to said first counting means (21) at the time the counted value of said second counting means (6) is zero.

5. Apparatus according to anyone of claims 1 to 4 characterized by a data latch circuit (23) for latching the counted value of said first counting means (21), the counted value of said first counting means (21) being latched periodically by said data latch circuit (23) and said first counting means (21) being reset so as to detect the rotational speed as the value latched by said data latch circuit (23).

6. Digital rotation detecting apparatus comprising
   - a two-phase resolver (1) outputting two signals each having a phase angle ($\theta_0$),
   - an exciter (17) for exciting said two-phase resolver (1),
   - a two-phase reference oscillator (2) outputting two signals each having a phase angle ($\theta^*$), and
   - a phase locked loop means (20) for synchronizing the phases of the output of said two-phase resolver (1) and the output of said two-phase reference oscillator (2), said phase locked loop means (20) including a phase difference detector (3) for detecting the phase difference between the output of said two-phase resolver (1) and the output of said two-phase reference oscillator (2), and a voltage control oscillator (5) outputting a frequency signal determined by the output of said phase difference detector (3),

**characterized by**

- a first counting means (21) for simultaneously counting up according to a frequency relating to the frequency of the output signal of said exciter (17) and counting down according to the frequency of the output signals of said two-phase reference oscillator (2), or vice versa, the output signal of said first counting means (21) corresponding to a rotational angle of said two-phase resolver (1).

## Revendications

1. Dispositif numérique de détection de rotation comprenant:
   - un résolveur à deux phases (1) produisant deux signaux ayant chacun un angle de phase ($\theta_o$),
   - un excitateur (17) pour exciter ledit résolveur à deux phases (1), et
   - une boucle à blocage de phase (20) pour synchroniser les phases de la sortie dudit résolveur deux phases (1) et un signal prédéterminé, ladite boucle à blocage de phase (20) comprenant un détecteur de différence de phase (3) pour détecter la différence de phase entre la sortie dudit résolveur à deux phases (1) et le signal prédéterminé, et un oscillateur de commande de tension (5) produisant un signal de fréquence déterminé par la sortie dudit détecteur de différence de phase (3),

   caractérisé par:
   - un générateur de signaux à deux phases (12) pour produire deux signaux de sortie ayant un angle de phase ($\widehat{\theta}$) proportionnel au signal de sortie dudit oscillateur de commande de tension (5), ledit détecteur de différence de phase (3) détectant la différence de phase entre l'angle de phase ($\theta_o$) des signaux de sortie dudit résolveur à deux phases (1) et l'angle de phase ($\widehat{\theta}$) des signaux de sortie dudit générateur de signaux à deux phases (12), et
   - un premier compteur (21) pour compter simultanément en additionnant selon une fréquence relative à la fréquence de signal de sortie dudit excitateur (17) et pour compter en soustrayant selon la fréquence dudit oscillateur de commande de tension (5) ou vice-versa, le signal de sortie dudit premier compteur (21) correspondant a l'angle de rotation dudit résolveur à deux phases (1).

2. Dispositif selon la revendication 1, caractérisé en ce que:
   - ladite boucle de blocage de phase (20) comprend en outre:
     un filtre à boucle de calcul (4) pour le calcul proportionnel et intégral de la sortie dudit détecteur de différence de phase (3), ledit oscillateur de commande de tension (5) produisant des impulsions d'une fréquence correspondant au signal de sortie dudit filtre à boucle de calcul (4), et
     un deuxième compteur (6) pour compter la fréquence de signal de sortie dudit oscillateur de commande de tension (5), l'angle de phase des deux signaux de sortie dudit générateur de signaux à deux phases (12) correspondant à la valeur comptée dudit deuxième ccmpteur (6), et
   - la valeur comptée dudit premier compteur (21) pouvant être augmentée ou diminuée par la fréquence multiple de la fréquence d'excitation dudit résolveur à deux phases (1) et la fréquence de signal de sortie dudit oscillateur de commande de tension (5), en détectant ainsi le nombre de rotations dudit résolveur à deux phases (1).

3. Dispositif selon la revendication 2, caractérisé en ce que la valeur comptée dudit deuxième compteur (6) est prédéterminée audit premier compteur (21) au moment où la phase de signal de sortie dudit excitateur (17) est égale à zéro.

4. Dispositif selon la revendication 2, caractérisé en ce que la valeur comptée indiquant la phase dudit excitateur (17) est prédéterminée au premier compteur (21) au moment où la valeur comptée dudit deuxième compteur (6) est égale à zéro.

5. Dispositif selon l'une quelconque des revendications 1 à 4, caractérisé par un circuit de blocage de données (23) pour bloquer la valeur comptée du premier compteur (21), la valeur comptée du premier compteur (21) étant bloquée périodiquement par ledit circuit de blocage de données (23) et ledit premier compteur (21) étant recalé de façon à détecter la vitesse de rotation comme étant la valeur

EP 0 224 671 B1

bloquée par ledit circuit de blocage de données (23).

6.  Dispositif numérique de détection de rotation, comprenant
    - un résolveur à deux phases (1) produisant deux signaux ayant chacun un angle de phase ($\theta_o$),
    - un excitateur (17) pour exciter ledit résolveur à deux phases (1),
    - un oscillateur de référence à deux phases (2) produisant deux signaux ayant chacun un angle de phase ($\theta^*$), et
    - une boucle de blocage de phase (20) pour synchroniser les phases de la sortie dudit résolveur à deux phases (1) et la sortie dudit oscillateur de référence à deux phases (2), ladite boucle de blocage de phase (20) comprenant un détecteur de différence de phase (3) pour détecter la différence de phase entre la sortie dudit résolveur à deux phases (1) et la sortie dudit oscillateur de référence à deux phases (2) et un oscillateur de commande de tension (5) produisant un signal de fréquence déterminé par la sortie dudit détecteur de différence de phase (3),
    caractérisé par
    - un premier compteur (21) pour compter simultanément en additionnant selon une fréquence relative à la fréquence du signal de sortie dudit excitateur (17) et pour compter en soustrayant selon la fréquence des signaux de sortie dudit oscillateur de référence à deux phases (2) ou vice-versa, la signal de sortie dudit premier compteur (21) correspondant à un angle de rotation dudit séparateur à deux phases (1).

**Patentansprüche**

1.  Digital-Rotationsdetektor mit
    - einem Zweiphasen-Drehmelder (1), der zwei Signale ausgibt, die jeweils einen Phasenwinkel ($\theta_0$) haben,
    - einem Erreger (17) zum Erregen des Zweiphasen-Drehmelders (1),
    - einer Phasenaufschaltschleifen-Einrichtung (20) zum Synchronisieren der Phasen des Ausgangssignals des Zweiphasen-Drehmelders (1) und eines vorbestimmten Signals, wobei die Phasenaufschaltschleifen-Einrichtung (20) einen Phasendifferenzdetektor (3) zum Erkennen der Phasendifferenz zwischen dem Ausgangssignal des Zweiphasen-Drehmelders (1) und dem vorbestimmten Signal und einen Spannungssteuerungsoszillator (5) enthält, der ein Frequenzsignal ausgibt, welches durch das Ausgangssignal des Phasendifferenzdetektors (3) bestimmt ist,
    **gekennzeichnet durch**
    - einen Zweiphasen-Signalgenerator (12) zum Erzeugen von zwei Ausgangssignalen mit einem Phasenwinkel ($\hat{\theta}$) in Proportion zu dem Ausgangssignal des Spannungssteuerungsoszillators (5), wobei der Phasendifferenzdetektor (3) die Phasendifferenz zwischen dem Phasenwinkel ($\theta_0$) der Ausgangssignale des Zweiphasen-Drehmelders (1) und dem Phasenwinkel ($\hat{\theta}$) der Ausgangssi-gnale des Zweiphasen-Signalgenerators (12) erkennt, und
    - eine erste Zähleinrichtung (21), die gleichermaßen gemäß einer der Frequenz des Ausgangssignals des Erregers (17) entsprechenden Frequenz aufwärts zählt und gemäß der Frequenz des Spannungssteuerungsoszillators (5) abwärts zählt oder umgekehrt, wobei das Ausgangssignal der ersten Zähleinrichtung (21) dem Drehwinkel des Zweiphasen-Drehmelders (1) entspricht.

2.  Detektor nach Anspruch 1, dadurch gekennzeichnet, daß
    - die Phasenaufschaltschleifen-Einrichtung (20) ferner aufweist:

    ein Rechenschleifenfilter (4), das das Ausgangssignal des Phasendifferenzdetektors (3) einer Proportional-plus-Integral-Rechnung unterzieht, wobei der Spannungssteuerungsoszillator (5) Impulse mit einer Frequenz erzeugt, die dem Ausgangssignal des Rechenschleifenfilters (4) entspricht, und

    eine zweite Zähleinrichtung (6) zum Zählen der Ausgangssignalfrequenz des Spannungssteuerungsoszillators (5), wobei der Phasenwinkel der beiden Ausgangssignale des Zweiphasen-Signalgenerators (12) dem Zählwert der zweiten Zähleinrichtung (6) entspricht, und
    - daß der Zählwert der ersten Zähleinrichtung (21) durch eine Mehrfach-Frequenz der Erregungsfrequenz des Zweiphasen-Drehmelders (1) und die Ausgangssignal-Frequenz des Spannungssteuerungsoszillators (5) vergrößerbar oder verkleinerbar ist, um dadurch die Anzahl der Umdrehungen des Zweiphasen-Drehmelders (1) zu erkennen.

8

3. Detektor nach Anspruch 2, dadurch gekennzeichnet, daß der Zählwert der zweiten Zähleinrichtung (6) zu dem Zeitpunkt, zu dem die Phase des Ausgangssignals des Erregers (17) null ist, auf denjenigen der ersten Zähleinrichtung (21) voreingestellt wird.

4. Detektor nach Anspruch 2, dadurch gekennzeichnet, daß der die Phase des Erregers (17) angebende Zählwert zu dem Zeitpunkt, zu dem der Zählwert der zweiten Zähleinrichtung (6) null ist, auf denjenigen der ersten Zähleinrichtung (21) voreingestellt wird.

5. Detektor nach einem der Ansprüche 1 bis 4, gekennzeichnet durch eine Datenhalteschaltung (23) zum Halten des Zählwertes der ersten Zähleinrichtung (21), wobei der Zählwert der ersten Zähleinrichtung (21) periodisch durch die Datenhalteschaltung (23) gehalten wird und die erste Zähleinrichtung (21) rückgesetzt wird, um die Drehgeschwindigkeit als durch die Datenhalteschaltung (23) gehaltenen Wert zu erkennen.

6. Digital-Rotationsdetektor mit
   - einem Zweiphasen-Drehmelder (1), der zwei Signale ausgibt, die jeweils einen Phasenwinkel ($\theta_0$) haben,
   - einem Erreger (17) zum Erregen des Zweiphasen-Drehmelders (1),
   - einem Zweiphasen-Referenzoszillator (2), der zwei Signale ausgibt, die jeweils einen Phasenwinkel ($\theta^*$) haben, und
   - einer Phasenaufschaltschleifen-Einrichtung (20) zum Synchronisieren der Phasen des Ausgangssignals des Zweiphasen-Drehmelders (1) und des Ausgangssignals des Zweiphasen-Referenzoszillators (2), wobei die Phasenaufschaltschleifen-Einrichtung (20) einen Phasendifferenzdetektor (3) zum Erkennen der Phasendifferenz zwischen dem Ausgangssignal des Zweiphasen-Drehmelders (1) und dem Ausgangssignal des Zweiphasen-Referenzoszillators (2) und einen Spannungssteuerungsoszillator (5) enthält, der ein Frequenzsignal ausgibt, welches durch das Ausgangssignal des Phasendifferenzdetektors (3) bestimmt ist,

   **gekennzeichnet durch**
   - eine erste Zähleinrichtung (21), die gleichermaßen gemäß einer auf die Frequenz des Ausgangssignals des Erregers (17) bezcgenen Frequenz aufwärts zählt und gemäß der Frequenz der Ausgangssignale des Zweiphasen-Referenzoszillators (2) abwärts zählt oder umgekehrt, wobei das Ausgangssignal der ersten Zähleinrichtung (21) dem Drehwinkel des Zweiphasen-Drehmelders (1) entspricht.

## Fig. 1
Prior Art

$\theta^* = 0$

REFERENCE OSCILLATOR CIRCUIT — 2

— 10

$\sin\theta^*$     $\cos\theta^*$

7

EXCITER

$\sin\theta_0$

$\cos\theta_0$

l

PHASE DIFFERENCE DETECTOR — 3

$\Delta\theta$

LOOP FILTER — 4

COUNTER — 6

V O C — 5

LATCH CIRCUIT — 8

$\theta r$

EP 0 224 671 B1

Fig.2

Fig.3

EP 0 224 671 B1

Fig. 4

EXCITER ~17

sin θ₀ ... $\sin \theta_o$

cos θ₀ ... $\cos \theta_o$

1

$\theta_o = 0$

20

5 — VOC

6 — COUNTER

12 — TWO-PHASE SIGNAL GENERATOR

$\sin \hat{\theta}$

$\cos \hat{\theta}$

3 — PHASE DIFFERENCE DETECTOR

$\Delta\theta$

4 — LOOP FILTER

21

U   D

PS UP-DOWN COUNTER

EP 0 224 671 B1

Fig. 5

EP 0 224 671 B1

Fig.6

EXCITER 17

sinθ

cosθ

1

20

5 — VOC

6 — COUNTER

12 — TWO-PHASE SIGNAL GENERATOR

sinθ
cosθ

3 — PHASE DIFFERENCE DETECTOR

Δθ

4 — LOOP FILTER

21 — UP-DOWN COUNTER

U    D

R ← 24

23 — DATA LATCH CIRCUIT

EP 0 224 671 B1

Fig. 7

EP 0 224 671 B1